**Europäisches Patentamt**

**European Patent Office**

**Office européen des brevets**

(11) Numéro de publication : **0 493 225 A1**

# (12) DEMANDE DE BREVET EUROPEEN

(21) Numéro de dépôt : **91403490.5**

(22) Date de dépôt : **20.12.91**

(51) Int. Cl.⁵ : **B60J 5/04,** E05F 7/02

(30) Priorité : **21.12.90 FR 9016081**

(43) Date de publication de la demande :
**01.07.92 Bulletin 92/27**

(84) Etats contractants désignés :
**DE ES GB**

(71) Demandeur : **REGIE NATIONALE DES USINES RENAULT S.A.
34, Quai du Point du Jour
F-92109 Boulogne Billancourt (FR)**

(72) Inventeur : **Bascou, Jacques
15, rue de la Fontaine Pleureuse
F-78580 Bazemont (FR)**
Inventeur : **Plat, Claude
14, rue Chauvelot
F-92240 Malakoff (FR)**

(54) **Porte latérale pivotante de véhicule automobile.**

(57)   Porte latérale (2,3) de véhicule automobile (1), pivotante autour d'un axe horizontal (13) perpendiculaire à son plan et localisé dans sa partie inférieure, venant en appui en position de fermeture contre deux montants (8,9) de la caisse sensiblement verticaux, caractérisée en ce qu'elle est articulée autour de deux points d'ancrage (16, 16') distincts de l'axe de pivotement (13).

FIG. 3

EP 0 493 225 A1

La présente invention se rapporte à une porte latérale de véhicule, pivotante sur la carrosserie de celui-ci autour d'un axe horizontal perpendiculaire à son propre plan.

Les portes pivotantes de véhicule ont déjà fait l'objet de nombreuses publications telles que la publication FR 2.380.911 se rapportant à un véhicule automobile, muni d'au moins une porte montée pivotante sur la carrosserie, autour d'un axe sensiblement perpendiculaire au plan de la porte.

Le plus souvent, l'articulation des portes pivotantes s'effectue sur l'aile du véhicule, et leur fermeture, au moyen d'une serrure classique de porte latérale. Ce type d'articulation nécessite toutefois une conception particulière du véhicule, augmentant sensiblement son encombrement latéral et ayant pour corollaire un débattement en hauteur important de la porte.

Le but de l'invention consiste à réaliser une porte pivotante, dont l'encombrement latéral soit minimum, et dont la hauteur en position ouverte soit inférieure à celle du hayon dans la même situation.

L'invention concerne une porte latérale de véhicule automobile pivotante autour d'un axe horizontal perpendiculaire à son plan, et localisé dans sa partie inférieure. En position fermée, cette porte vient en appui contre deux montants de la caisse sensiblement verticaux. Elle est caractérisée en ce qu'elle est articulée autour de deux points d'ancrage, distincts de l'axe de pivotement.

Selon un mode de réalisation de l'invention, les points d'ancrage d'une part, et l'axe de pivotement d'autre part, sont portés par deux montants différents de la caisse.

Selon un mode de réalisation de l'invention, les points d'ancrage sont portés par le montant central de la caisse et, l'axe de pivotement, par le montant opposé.

Selon un mode de réalisation de l'invention, les points d'ancrage sont suffisamment éloignés l'un de l'autre pour contribuer efficacement à la rigidité de la porte.

Selon un mode de réalisation de l'invention, les points d'ancrage sont réunis fonctionnellement au système de verrouillage de la porte, en un mécanisme unique.

Selon un mode de réalisation de l'invention, le bord latéral de la porte est muni de têtons, correspondant aux points d'ancrage du montant central.

Selon un mode de réalisation de l'invention, les deux points d'ancrage permettent à la porte, préalablement à son ouverture, de s'entrebailler de façon suffisante pour libérer les contraintes des joints d'étanchéité, et dégager les éléments de sellerie.

Selon un mode de réalisation de l'invention, l'ouverture proprement dite de la porte s'effectue par un mouvement combiné de rotation et de translation par rapport à l'axe de pivotement.

Selon un mode de réalisation de l'invention, la porte est solidaire d'un palier mobile vis-à-vis d'un tourillon monté sur un boîtier de support fixé sur le montant de la caisse opposé au montant central.

Selon un mode de réalisation de l'invention, le palier porte deux plots diamètralement opposés par rapport à l'axe de pivotement, qui sont guidés en déplacement par deux rampes ménagées sur le boîtier de support du tourillon, et diamètralement opposées par rapport à l'axe de pivotement.

Selon un mode de réalisation de l'invention, chaque rampe présente un premier secteur parallèle à l'axe de pivotement, un second secteur incliné par rapport à cet axe et un troisième secteur perpendiculaire à cet axe, les trois secteurs autorisant respectivement un mouvement de simple translation du palier le long de l'axe, un mouvement combiné de rotation et de translation par rapport à cet axe et un mouvement de simple rotation autour de celui-ci.

Selon un mode de réalisation de l'invention, l'ensemble de pivotement est équipé d'un compensateur intégré, qui assure l'assistance à l'ouverture et à la fermeture, ainsi que le maintien de la porte en position ouverte.

Selon un mode de réalisation de l'invention, l'ensemble des mouvements d'ouverture et de fermeture est motorisé.

Selon un mode de réalisation de l'invention, la porte est une porte avant de véhicule.

Selon un mode de réalisation, la porte est une porte arrière de véhicule.

L'invention sera mieux comprise à la lecture de la description suivante d'un mode de réalisation de l'invention, en liaison avec les dessins annexés sur lesquels :

– La figure 1 est une vue d'ensemble d'un véhicule dont les portes latérales pivotantes sont fermées (1A), et ouvertes (1B),

– La figure 2 représente une porte avant pivotante, en position fermée,

– La figure 3 représente la même porte avant pivotante, en position ouverte,

– La figure 4 regroupe trois vues de dessus de la même porte avant pivotante, en position fermée (4A), entrebaillée (4B) et ouverte (4C),

– La figure 5 représente l'ensemble de pivotement de la porte,

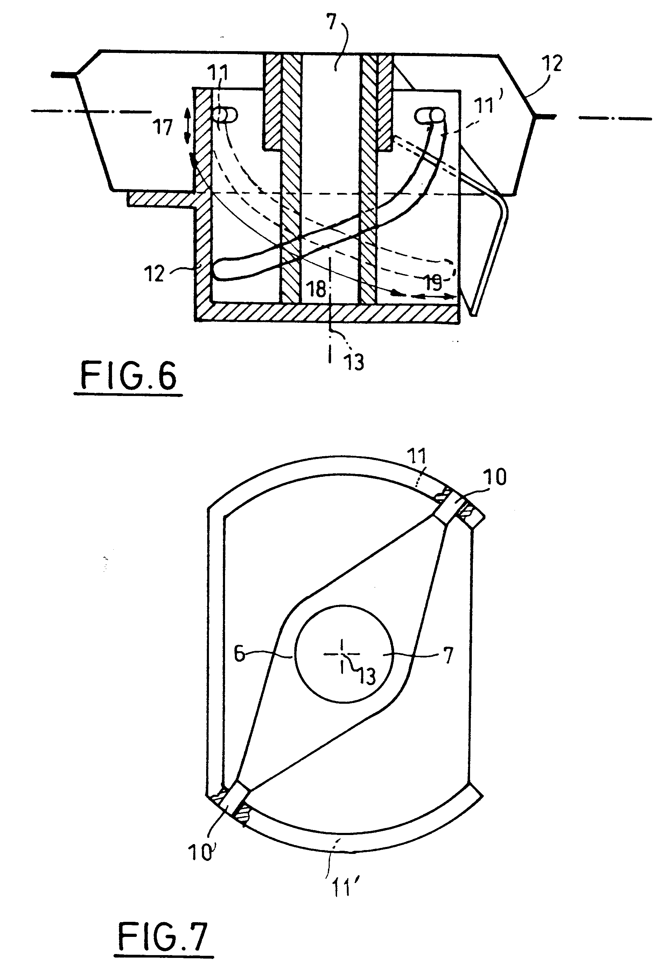

– La figure 6 correspond à une coupe selon A - A de la figure 5,

– La figure 7 est une coupe selon B - B de la figure 6.

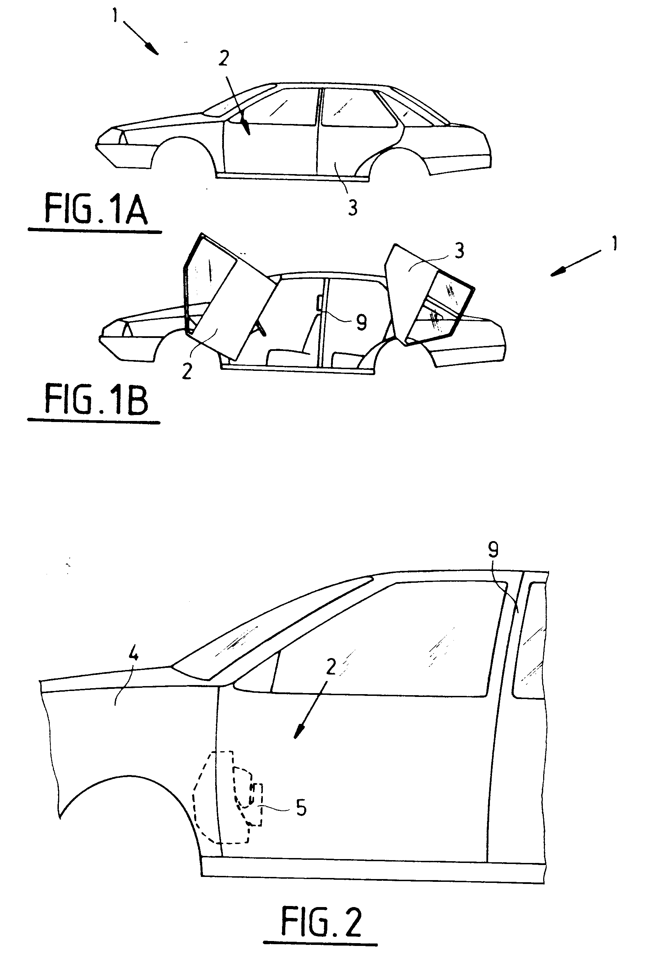

Le véhicule 1 représenté sur la figure 1 comporte une porte avant 2 et une porte arrière 3, pivotantes. L'invention s'applique donc indifféremment à une porte avant ou à une porte arrière, et le fait que la description qui va suivre concerne plus particulièrement une porte avant, n'en limite pas la portée.

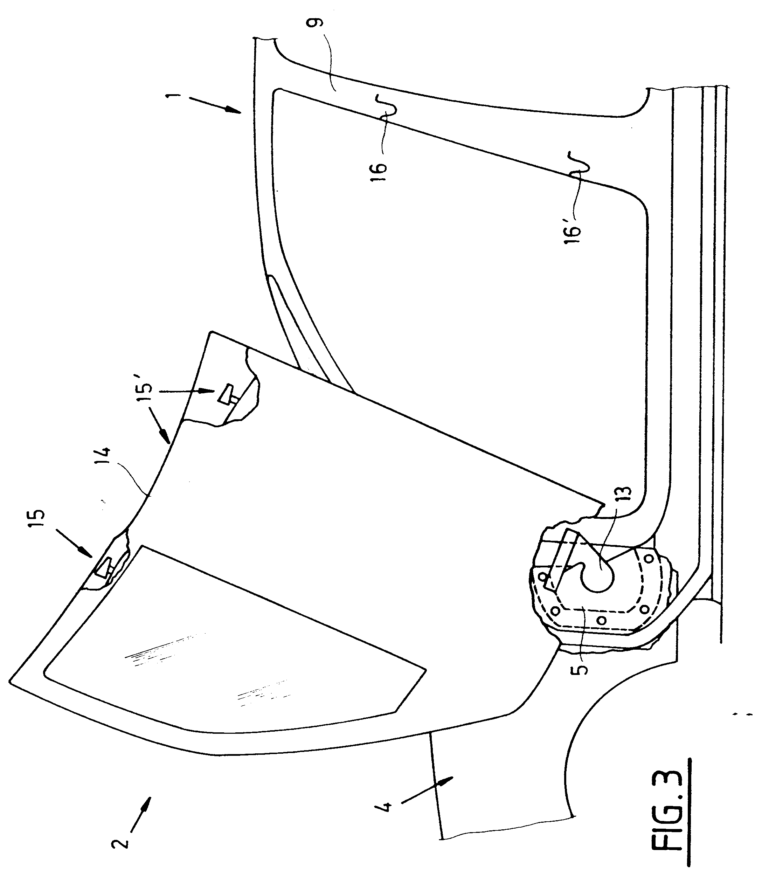

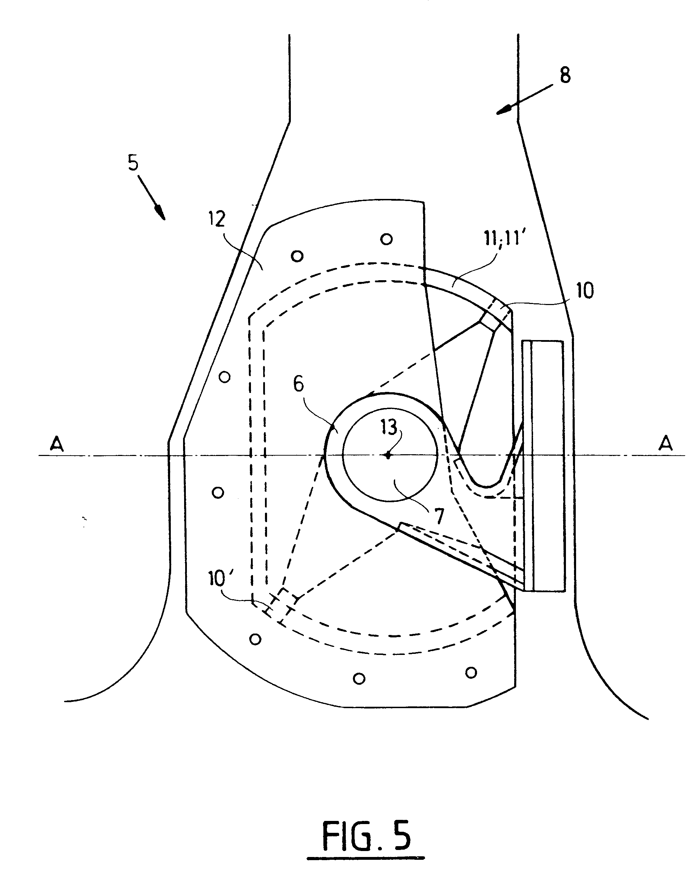

Sur la figure 2 on voit apparaître en traits pointillés derrière l'aile 4 et la porte avant 2 l'ensemble de pivotement 5 qu'on retrouve, en position d'ouverture sur la figure 3. Cet ensemble de pivotement 5 faisant l'objet de la figure 5 comporte un palier 6 solidaire de la porte 2.

Ce palier se débat autour du tourillon 7 porté par le montant de la caisse 8 opposé au montant central 9. Sont solidaires de ce palier 6 deux plots (10, 10'), qui sont guidés en coulissement à l'intérieur de deux rampes (11, 11') ménagées dans le boîtier de support 12 du tourillon 7. Les deux plots (10, 10') ainsi que les deux rampes de guidage (11, 11') sont diamétralement opposées par rapport à l'axe de pivotemment 13. L'axe de pivotement 13 passe par le centre du tourillon 7. Les deux rampes (11, 11') ont un tracé qui correspond au mouvement de la porte souhaité.

Sur le bord latéral 14 de la porte 2 opposé à l'axe de pivotement 13 sont prévus deux têtons (15, 15') qui viennent se loger, lors de la fermeture de la porte 2 dans deux points d'ancrage (16, 16') correspondants, sur le montant de caisse central 9 du véhicule 1 (cf. figure 3).

Les deux points d'ancrage (16, 16') ont un rôle de charnière et de maintien de la porte 2, en position fermée. De façon avantageuse, ces deux points d'ancrage (16, 16') sont suffisamment éloignés l'un de l'autre pour contribuer efficacement à la rigidité de la porte 2. Ils peuvent en outre être réunis en un mécanisme unique non représenté, avec le système de verrouillage de la porte.

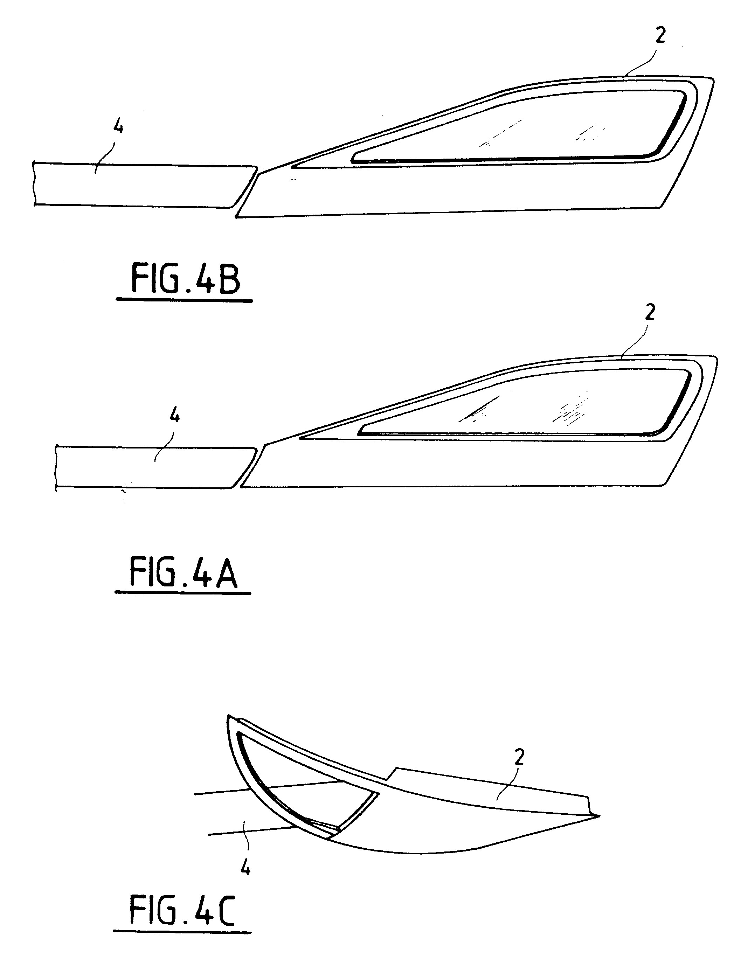

La figure 4 (4A, 4B, 4C) illustre les différentes phases du mouvement d'ouverture de la porte avant 2. La première phase, à savoir le déverrouillage de la porte fait jouer leur rôle de charnière aux points d'ancrage (16, 16'). Cette première phase est limitée en rotation. Elle assure la libération de la partie avant de la porte par un déverrouillage au niveau de l'ensemble du pivotement 5. Elle permet également de libérer les contraintes du joint d'étanchéité, non représenté sur les figures, et de dégager les éléments de sellerie, également non représentés, afin d'amorcer la rotation de la porte 2 autour de l'axe de pivotement 13.

Après la phase de déverrouillage, la porte effectue un mouvement de translation et de rotation, par rapport à l'axe de pivotement 13. Ce mouvement est déterminé par le déplacement des plots (10, 10') dans les rampes (11, 11') et donc par le tracé des rampes ( 11, 11'). Celles-ci comportent trois secteurs successifs (17, 18, 19) et sont symétriques et diamétralement opposées par rapport à l'axe de pivotement 13. En partant de l'extrêmité correspondant à la position de fermeture de la porte 2 chaque rampe possède:

– un premier secteur 17, parallèle à l'axe principal de pivotement 13, correspondant à un mouvement de translation simple de la porte 2 vers l'extérieur, le long de l'axe 13,

– un second secteur 18, incliné par rapport à l'axe, correspondant à un mouvement combiné de translation et de rotation de la porte 2 vers l'extérieur et vers le haut,

– un troisième secteur 19, perpendiculaire à l'axe de pivotement, correspondant à un mouvement de simple rotation de la porte 2 vers le haut, conduisant à l'ouverture complète de celle-ci.

Le mouvement d'ouverture de la porte 2 peut avantageusement correspondre à un pivotement global vers le haut d'environ 70°. Pour la porte amère 3, la cinématique est symétrique à celle de la porte avant 2, avec un pivotement en partie arrière et un ancrage par deux points sur le montant central 9 de la caisse.

La porte pivotante 2, 3, faisant l'objet de l'invention présente de nombreux avantages dont les principaux sont les suivants :

– encombrement minimum en direction latérale, inférieure à celui des portes coulissantes classiques,

– possibilité de réunir en un mécanisme unique l'articulation sur le montant central et le verrouillage de la porte,

– contribution à la rigidité de la porte par la présence de deux points d'ancrage suffisamment distants, sur le montant central de la caisse,

– intégration aisée d'un compensateur dans le mécanisme de pivotement, par exemple sous la forme d'un ressort hélicoïdal associé au tourillon et au palier, qui remplit sa fonction d'assistance et d'amortissement aussi bien au regard du mouvement de translation que de rotation de la porte, lors de l'ouverture et de la fermeture de celle-ci,

– possibilité de motoriser, sans danger pour l'utilisateur ou les personnes se trouvant à proximité du véhicule, les mouvements d'ouverture et de fermeture.

## Revendications

1. Porte latérale (2,3) de véhicule automobile (1), pivotante autour d'un axe horizontal (13), perpendiculaire à son plan et localisé dans sa partie inférieure, venant en appui en position de fermeture contre deux montants (8,9) de la caisse sensiblement verticaux, caractérisée en ce qu'elle est articulée autour de deux points d'ancrage (16, 16') distincts de l'axe de pivotement ( 13).

2. Porte latérale (2,3) de véhicule automobile (1) selon la revendication 1, caractérisée en ce que les points d'ancrage (16, 16') d'une part, et l'axe de pivotement (13) d'autre part, sont portés par deux montants (8,9) différents de la caisse.

3. Porte latérale (2,3) de véhicule automobile (1) selon la revendication 2, caractérisée en ce que les points d'ancrage (16, 16') sont portés par le montant central de la caisse (8) et l'axe de pivotement (13) par le montant opposé (9).

4. Porte latérale (2,3) de véhicule automobile (1) selon l'une quelconque des revendications précédentes, caractérisée en ce que les points (16,16') d'ancrage sont suffisamment éloignés l'un de l'autre pour contribuer efficacement à la rigidité de la porte (2,3).

5. Porte latérale (2,3) de véhicule automobile (1) selon l'une quelconque des revendications précédentes, caractérisée en ce que les points d'ancrage (16, 16') sont réunis fonctionnellement au système de verrouillage de la porte, en un mécanisme unique.

6. Porte latérale (2,3) de véhicule automobile (1) selon l'une quelconque des revendications précédentes, caractérisée en ce que son bord latéral (14) est muni de deux têtons (15,15') correspondant aux points d'ancrage (16, 16') du montant central (9).

7. Porte latérale (2,3) de véhicule automobile (1) , selon l'une quelconque des revendications précédentes, caractérisée en ce que les deux points d'ancrage (16, 16') lui permettent, préalablement à son ouverture, de s'entrebailler de façon suffisante pour libérer les contraintes des joints d'étanchéité, et dégager les éléments de sellerie.

8. Porte latérale (2,3) de véhicule automobile (1) selon l'une quelconque des revendications précédentes, caractérisée en ce que l'ouverture proprement dite de la porte (2,3) s'effectue par un mouvement combiné de rotation et de translation par rapport à l'axe de pivotement (13).

9. Porte latérale (2,3) de véhicule automobile (1) selon l'une quelconque des revendications précédentes, caractérisée en ce qu'elle est solidaire d'un palier (6) mobile vis-à-vis d'un tourillon (7) monté sur un boîtier de support (12) fixé sur le montant de la caisse (9) opposé au montant central (8).

10. Porte latérale (2,3) de véhicule automobile (1) selon la revendication 9, caractérisée en ce que le palier (6) porte deux plots (10,10') diamétralement opposés par rapport à l'axe de pivotement (13) qui sont guidés en déplacement par deux rampes (11, 11') ménagées sur le boîtier de support (12) du tourillon (7) et diamétralement opposées par rapport à l'axe de pivotement ( 13).

11. Porte latérale (2,3) de véhicule automobile (1) selon la revendication 10, caractérisée en ce que chaque rampe présente un premier secteur (17) parallèle à l'axe de pivotement (13) un second secteur (18) incliné par rapport à cet axe (13) et un troisième secteur (19) perpendiculaire à cet axe (13), les trois secteurs (17, 18, 19) autorisant respectivement un mouvement de simple translation du palier le long de l'axe (13), un mouvement combiné de rotation et de translation par rapport à cet axe (13), et un mouvement de simple rotation autour de celui-ci.

12. Porte latérale (2,3) de véhicule automobile (1) selon l'une quelconque des revendications 8 à 11, caractérisée en ce que l'ensemble de pivotement (5) est équipé d'un compensateur intégré, qui assure l'assistance à l'ouverture et à la fermeture, ainsi que le maintien en position ouverte.

13. Porte latérale (2,3) de véhicule automobile (1) selon l'une quelconque des revendications précédentes, caractérisée en ce que l'ensemble des mouvements d'ouverture et de fermeture est motorisé.

14. Porte latérale (2,3) de véhicule automobile (1) selon l'une quelconque des revendications précédentes, caractérisée en ce qu'elle est constituée par une porte avant (2).

15. Porte latérale (2,3) de véhicule automobile (1) selon l'une quelconque des revendications 1 à 13, caractérisée en ce qu'elle est constituée par une porte arrière (3).

FIG.1A

FIG.1B

FIG.2

FIG.3

FIG.4B

FIG.4A

FIG.4C

## FIG. 5

## FIG.6

## FIG.7

EP 0 493 225 A1

**Office européen des brevets**

# RAPPORT DE RECHERCHE EUROPEENNE

Numero de la demande

EP 91 40 3490

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2 036 314 (RENAULT)<br><br>* page 2, ligne 27 - ligne 35; figures 1,3,4 *<br>--- | 1-3,5,7,<br>8,9,11 | B60J5/04<br>E05F7/02 |
| A | FR-A-2 485 075 (FAIVRE)<br>* page 3, ligne 1 - ligne 6; figure 1 *<br>--- | 8-13 | |
| A | L'AUTOMOBILE MAGAZINE<br>no. 496, Octobre 1987, FRANCE<br>page 67;<br><br>----- | 1,14,15 | |
| | | | **DOMAINES TECHNIQUES RECHERCHES (Int. Cl.5)**<br><br>B60J<br>E05F |

Le présent rapport a été établi pour toutes les revendications

| Lieu de la recherche | Date d'achèvement de la recherche | Examinateur |
|---|---|---|
| LA HAYE | 30 MARS 1992 | FOGLIA A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

......................................................
& : membre de la même famille, document correspondant

EPO FORM 1503 03.82 (P0402)

10